Europäisches Patentamt

European Patent Office

Office européen des brevets

(19)

(11) Veröffentlichungsnummer: **0 094 479**
**B1**

(12) # EUROPÄISCHE PATENTSCHRIFT

(45) Veröffentlichungstag der Patentschrift :
**09.10.85**

(21) Anmeldenummer : **83101688.6**

(22) Anmeldetag : **22.02.83**

(51) Int. Cl.⁴ : **F 24 F 13/065, B 60 H   1/24**

(54) **Kugellüfter für Fahrzeuge.**

(30) Priorität : **15.05.82 DE 3218360**

(43) Veröffentlichungstag der Anmeldung :
**23.11.83 Patentblatt 83/47**

(45) Bekanntmachung des Hinweises auf die Patenter-
teilung : **09.10.85 Patentblatt 85/41**

(84) Benannte Vertragsstaaten :
**BE DE FR GB IT NL SE**

(56) Entgegenhaltungen :
**FR-A- 1 123 954**
**FR-A- 2 087 220**
**FR-A- 2 245 182**
**GB-A- 1 436 838**
**US-A- 2 730 032**
**US-A- 3 319 560**

(73) Patentinhaber : **Gebr. Happich GmbH**
**Postfach 10 02 49 Clausenbrücke 1**
**D-5600 Wuppertal 1 (DE)**

(72) Erfinder : **Ross, Paul**
**Albert-Schweitzer-Strasse 64**
**D-5600 Wuppertal 1 (DE)**
Erfinder : **Jäckel, Helmut**
**An der Maikammer 26**
**D-5620 Velbert 15 (DE)**

## Beschreibung

Die Erfindung bezieht sich auf einen Kugellüfter für Fahrzeuge, bestehend aus zwei mit Rändern gegeneinandergesetzte, von einem Führungsring übergriffene Schalen, von denen die eine Lufteintrittsöffnungen und die andere eine diesen gegenüberliegende Luftaustrittsdüse aufweist, wobei deren Lochrand konzentrisch von einem Stellring umgriffen wird, der einen von Stegen getragenen mittigen Zapfen aufweist, der sich durch den Hohlraum des Kugellüfters erstreckt und an seinem freien Endbereich einen Schließteller trägt, der ein Verschließen der Lufteintrittsöffnungen durch ein Verdrehen des Stellrings ermöglicht.

Großraumfahrzeuge, wie Autobusse, werden oftmals mit jedem Sitzplatz zugeordneten Luftdüsen ausgerüstet. Um deren individuelle Einstellbarkeit hinsichtlich der gewünschten Luftstromrichtung zu ermöglichen, werden die bekannten Lüfter im allgemeinen kugelgelenkig von einem Führungsring gehalten. Die kugelgelenkige Halterung der Lüfter verlangt eine kugelförmige Ausbildung der Lüftergrundkörper, was in der Praxis hinsichtlich einer einfachen und kostengünstigen Ausbildung Schwierigkeiten bereitet. So ist es bekannt, den Grundkörper aus zwei halbkugelförmigen Hälften zusammenzusetzen und an der Stoßnaht miteinander zu verkleben. Diese Herstellungsart ist recht umständlich, langwierig und damit kostenintensiv, zumal auch noch die weiteren Lüfterbestandteile, wie Stellring und Schließteller separat montiert und befestigt werden müssen. Es ist weiterhin bekannt, zwei Kugelhälften randseitig mit einem Ringwulst und mit einer den Ringwulst formschlüssig aufnehmenden Ringnut auszubilden. Diese Ausbildungsart verlangt relativ dicke Wandungen für die Anordnung der Ringnut, bietet keine Verdrehsicherung für die Kugelhälften und stellt auch nicht den Mangel ab, die weiteren Lüftereinzelteile separat montieren zu müssen.

Es ist nun Aufgabe der Erfindung, einen Kugellüfter der eingangs genannten Art zu schaffen, der sich durch eine besonders einfache und materialsparende Herstellbarkeit und insbesondere durch eine schnell und einfach durchzuführende Zusammenbaubarkeit seiner Einzelteile auszeichnen soll.

Gemäß der Erfindung ist für die Lösung dieser Aufgabe vorgesehen, daß der Schließteller in einer auf der der Luftaustrittsöffnung abgewandten Außenfläche der die Lufteintrittsöffnungen aufweisenden Schale aufliegenden Anordnung fest mit dem Zapfen verbunden ist.

Durch die erfindungsgemäße Maßnahme brauchen die Einzelteile des Kugellüfters nur noch lose zusammengesteckt zu werden und bilden nach der Verbindung von Schließteller und Zapfen eine fertige Baueinheit. Es ist demnach nicht mehr erforderlich, die beiden Schalen zwecks Herstellung einer Klipsverbindung relativ dickwandig auszubilden oder die Schalen randseitig in arbeits- und zeitaufwendiger Weise miteinander zu verkleben.

Im Rahmen der Erfindung ist es möglich, daß der Zapfen an seinem freien Endbereich eine Ringnut mit einem darin eingesetzten Haltering aufweist. Diese Maßnahme ermöglicht eine einfache und überaus schnell durchführbare Montage und auch Demontage der Kugellüftereinzelteile.

Im Hinblick darauf, daß die Kugellüfter der erfindungsgemäßen Art im allgemeinen wartungsfrei und nicht reparaturbedürftig sind, sieht eine zweckmäßige Weiterbildung der Erfindung vor, daß der Zapfen aus Kunststoff besteht und an seinem freien Ende einen nach dem Zusammenfügen der Einzelteile des Kugellüfters durch Ultraschallnieten gebildeten Nietkopf aufweist. Der Zapfen mit Stellring kann somit einfach und kostengünstig ebenso wie die Schalen und der Schließteller aus einem thermoplastischen Kunststoff, z. B. durch Spritzgießen, hergestellt werden und bedarf vor dem Zusammenfügen mit den Schalen und dem Schließdeckel keiner aufwendigen formgebenden Bearbeitung.

Vorteilhafterweise ist zwischen dem Haltering bzw. dem Nietkopf und dem Schließteller ein Distanzring angeordnet, der bevorzugt aus einem federelastische Eigenschaften aufweisenden Material besteht, wobei sich Polyurethan mit einer Härte von etwa 80 Shore A als besonders zweckmäßig erwiesen hat. Durch diesen Distanzring wird eine gewisse Pufferwirkung erzielt, die das Verstellen des Schließtellers über den Stellring begünstigt.

Schließlich ist es von Vorteil, daß die Schalen, nach einem weiteren Merkmal der Erfindung, an den aneinanderliegenden Rändern eine Steckzapfenverbindung als Verdrehsicherung aufweisen.

Der Gegenstand der Erfindung wird im folgenden anhand eines in der Zeichnung dargestellten Ausführungsbeispiels näher erläutert. Es zeigen

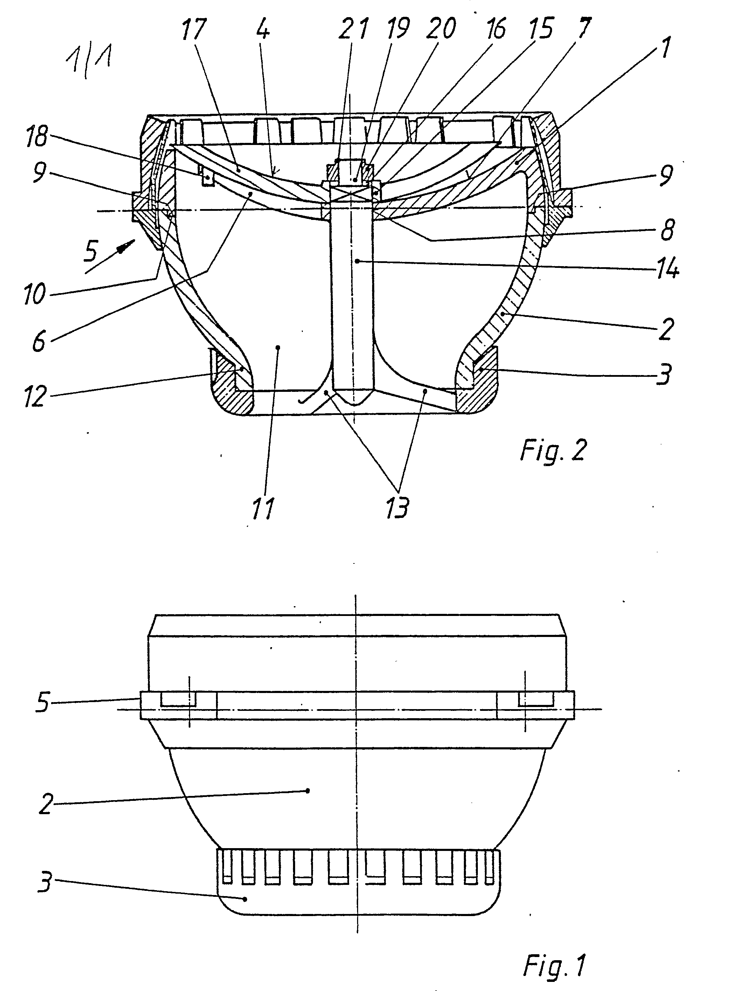

Figur 1 einen Kugellüfter in Ansicht und

Figur 2 einen Vertikalschnitt durch den Kugellüfter nach Anspruch 1.

Der Kugellüfter besteht aus den beiden Schalen 1 und 2, dem Stellring 3, dem Schließteller 4 und dem zweiteiligen Führungsring 5, der die Schalen 1 und 2 übergreift und als Befestigungsmittel für den Kugellüfter dient.

Die Schale 1 weist nur über einen relativ kurzen Wandungsbereich eine Kugelform auf. An den kugelförmigen Wandungsbereich schließt sich ein mit Lufteinlaßöffnungen 6 versehener hohlrund ausgebildeter Wandungsteil 7 mit einer zentrischen Durchgangsbohrung 8 an. Im dem Wandungsteil 7 können z. B. drei als kreissegmentförmige Durchbrüche ausgebildete Lufteinlaßöffnungen 6 gleichmäßig verteilt angeordnet sein.

Die Schale 2 schließt sich mit dem Rand an den Rand der Schale 1 an, und zwar derart, daß sich außen und innen ein glattwandiger Übergang ergibt. Zum Bewirken einer Verdrehsicherung besitzt die Schale 1 zwei einander diametral gegenüberliegende Nocken 9, die über den Rand vorstehen und formschlüssig in entsprechende Ausnehmungen 10 der Schale 2 eingreifen. Der untere Bereich der Schale 2 ist flaschenhalsartig eingezogen und mit einer zentrischen Luftaustrittsöffnung 11 ausgebildet. Der die Luftaustrittsöffnung 11 umgebende Kragen 12 wird konzentrisch von dem Stellring 3 umgriffen, dessen nach einwärts gerichteter Flansch sich am freien Ende des Kragens 12 abstützt.

Der Stellring 3, der aus einem Kunststoff-Spritzling besteht, weist einen von drei Stegen 13 getragenen zentrischen Zapfen 14 auf, der die Durchgangsbohrung 8 durchgreift und mit einem Überstand aus dieser herausragt. Der sich unmittelbar an den Wandungsteil 7 anschließende Bereich des Überstands ist unrund, z. B. als Vierkant 15 ausgebildet, und nimmt verdrehfest den mit einer entsprechenden unrunden Öffnung 16 versehenen Schließteller 4 auf, der der hohlrunden Ausbildung des Wandungsteils 7 angepaßt ist und auf diesem aufliegt. Dabei besitzt der Schließteller eine propellerförmige Ausbildung und Flügel 17, die in der Lage sind, die Lufteinlaßöffnungen 6 durch Verdrehen des Stellringes 3 ganz oder bereichsweise zu verschließen. Die erreichte Schließendstellung kann durch angeformte Anschlagnocken 18 ebenso wie die größtmögliche Offenstellung vorgegeben sein. Der den Schließteller 4 noch überragende Überstand des Zapfens 14 ist ein runder Zapfenendabschnitt 19, der eine Distanzbuchse oder einen Distanzring 20 aufnimmt, welcher aus Polyurethan bestehen kann und als Puffer dient. Der freie Endbereich des Zapfenendabschnitts 19 ist als Nietkopf 21 ausgebildet, det bevorzugterweise durch Ultraschallnieten gebildet ist.

Eine andere in der Zeichnung nicht dargestellte Möglichkeit kann darin bestehen, daß der Zapfenendabschnitt 19 mit einer größeren Länge ausgebildet und mit einer Ringnut zur Aufnahme eines Klemm- oder Federringes versehen ist.

Der Zusammenbau des Kugellüfters kann aufgrund der beschriebenen Ausbildung besonders schnell und einfach durchgeführt werden, und zwar durch bloßes Zusammenstecken der Einzelteile 1 bis 4 und 20. Nach dem Zusammenstecken der Einzelteile wird deren Zusammenhalt durch die Bildung des Nietkopfes 21 durch Ultraschallschweißen oder durch das Aufklemmen eines Federringes hergestellt, wobei auf eine gewisse Vorspannung des Distanzringes 20 geachtet werden sollte.

Nach der Anbringung des Führungsringes 5, bei dem es sich um ein Bauteil bekannter Art handeln kann, ist der Kugellüfter einbaufertig.

**Patentansprüche**

1. Kugellüfter für Fahrzeuge, bestehend aus zwei mit Rändern gegeneinandergesetzte, von einem Führungsring (5) übergriffene Schalen (1, 2), von denen die eine Lufteintrittsöffnungen (6) und die andere eine diesen gegenüberliegende Luftaustrittsöffnung (11) aufweist, wobei deren Lochrand (12) konzentrisch von einem Stellring (3) umgriffen wird, der einen von Stegen (13) getragenen mittigen Zapfen (14) aufweist, der sich durch den Hohlraum des Kugellüfters erstreckt und an seinem freien Endbereich einen Schließteller (4) trägt, der ein Verschließen der Lufteintrittsöffnungen (6) durch ein Verdrehen des Stellrings (3) ermöglicht, dadurch gekennzeichnet, daß der Schließteller (4) in einer auf der der Luftaustrittsöffnung (11) abgewandten Außenfläche (7) in der die Lufteintrittsöffnungen (6) aufweisenden Schale (1) aufliegenden Anordnung fest mit dem Zapfen (14) verbunden ist.

2. Kugellüfter nach Anspruch 1, dadurch gekennzeichnet, daß der Zapfen (14) an seinem freien Endbereich eine Ringnut mit einem darin eingesetzten Haltering aufweist.

3. Kugellüfter nach Anspruch 1, dadurch gekennzeichnet, daß der Zapfen (14) aus Kunststoff besteht und an seinem freien Ende einen nach dem Zusammenfügen der Einzelteile des Kugellüfters durch Ultraschallnieten gebildeten Nietkopf (21) aufweist.

4. Kugellüfter nach Anspruch 2 oder 3, dadurch gekennzeichnet, daß zwischen dem Haltering bzw. dem Nietkopf (21) und dem Schließteller (4) ein Distanzring (20) angeordnet ist.

5. Kugellüfter nach Anspruch 4, dadurch gekennzeichnet, daß der Distanzring (20) aus einem federelastische Eigenschaften aufweisenden Material besteht.

6. Kugellüfter nach Anspruch 4 oder 5, dadurch gekennzeichnet, daß der Distanzring (20) aus Polyurethan besteht und etwa 80 Shore A aufweist.

7. Kugellüfter nach einem der Ansprüche 1 bis 6, dadurch gekennzeichnet, daß die Schalen (1, 2) an den aneinanderliegenden Rändern eine Steckzapfenverbindung (9, 10) als Verdrehsicherung aufweisen.

**Claims**

1. A ball-type ventilator for vehicles, comprising two shells (1, 2) arranged with edges thereof against one another and a guide ring (5) which grips the shells, one of the shells having air entry openings (6) and the other shell having an air exit opening (11) lying opposite thereto, there being a setting ring (3) which extends concentrically around and grips the edge (12) of the exit opening and which comprises a central spigot (14), carried by webs (13), extending through the cavity of the ball-type ventilator and carrying at its free end region a closure plate (4) which makes it possible to close the air entry openings (6) by rotation of the setting ring (3), characterised in that the closure plate (4) is firmly connected with the spigot (14) in an arrangement resting on the outer surface (7), remote from the air exit opening (11), of the shell (1) having the air entry openings (6).

2. A ball-type ventilator according to claim 1, characterised in that the spigot (14) is provided, at its free end region, with an annular groove having a retaining ring inserted in it.

3. A ball-type ventilator according to claim 1, characterised in that the spigot (14) is made of synthetic plastics material and comprises, at its free end, a rivet head (21) formed by ultrasonic riveting after the individual parts of the ball-type ventilator have been assembled together.

4. A ball-type ventilator according to claim 2 or 3, characterised in that a spacing ring (20) is arranged between the retaining ring or the rivet head (21) and the closure plate (4).

5. A ball-type ventilator according to claim 4, characterised in that the spacing ring (20) is made of a material having resiliently elastic properties.

6. A ball-type ventilator according to claim 4 or 5, characterised in that the spacing ring (20) is made of polyurethane of approximately 80 Shore A.

7. A ball-type ventilator according to one of claims 1 to 6, characterised in that the shells (1, 2) have a pin-type connection (9, 10) where their edges rest on one another as security against rotation.

**Revendications**

1. Aérateur sphérique pour véhicules, comprenant deux coquilles (1, 2) placées l'une contre l'autre par leurs bords par une bague de guidage (5), dont l'une comporte des ouvertures d'entrée d'air (6) et l'autre une ouverture de sortie d'air (11) située en face de celles-ci, son bord perforé (12) étant entouré concentriquement par une bague de réglage (3) qui comporte une tige centrale (14) supportée par des nervures (13) qui s'étend à travers la cavité de l'aérateur sphérique et comporte, à sa zone d'extrémité, une coupelle de fermeture circulaire (4) qui permet de fermer les ouvertures d'entrée d'air (6) en faisant tourner la bague de réglage (3), caractérisé en ce que la coupelle de fermeture (4) est reliée rigidement à la tige (14) en étant disposée sur la surface extérieure (7) de la coupelle (1) comportant les ouvertures d'entrée d'air (6) opposées à l'ouverture de sortie d'air (11).

2. Aérateur sphérique selon la revendication 1, caractérisé en ce que la tige (14) comporte, à son extrémité libre, une rainure annulaire dans laquelle est insérée une bague de retenue.

3. Aérateur sphérique selon la revendication 1, caractérisé en ce que la tige (14) est en matière plastique et comporte à son extrémité libre une tête de rivet (21) formée par rivetage aux ultrasons après l'assemblage des composants de l'aérateur sphérique.

4. Aérateur sphérique selon la revendication 2 ou 3, caractérisé en ce qu'une bague d'écartement (20) est placée entre la bague de retenue ou la tête de rivet (21) et le couvercle de fermeture (4).

5. Aérateur sphérique selon la revendication 4, caractérisé en ce que la bague d'écartement (20) est constitué par une matière présentant des propriétés d'élasticité.

6. Aérateur sphérique selon la revendication 4 ou 5, caractérisé en ce que la bague d'écartement (20) est en polyuréthane et présente une dureté Shore A d'environ 80.

7. Aérateur sphérique selon l'une des revendications 1 à 6, caractérisé en ce que les coquilles (1, 2) comportent, à leurs bords contigus, un assemblage mâle-femelle (9, 10) pour en empêcher la rotation.

1/1

17  4  21 19 20  16 15 7  1

18
9

5

10

6

12

9
8
14
2
3

11  13

Fig. 2

5

2

3

Fig.1